# EUROPEAN PATENT APPLICATION

(11) **EP 3 786 859 A1**
(43) Date of publication of application: **03.03.2021**
(21) Application number: 19793885.5
(22) Date of filing: 04.03.2019
(51) Int. Cl.: G06N 20/00

(54) **METHOD OF INTERPRETING FLAW DETECTOR READ-OUTS AND DIGITIZED SIGNALS FOR EXAMINATION OF SOLID BODIES**

(30) Priority: 23.04.2018 RU 2018115274
(71) Applicant: OBSCHESTVO S OGRANICHENNOY OTVETSTVENNOSTYU "NEUROSCANNER", Samara, 443110 (RU)
(72) Inventor: IUREV, Rodion Nikolaevich, Podporozhye, 187780 (RU)
(74) Representative: Berggren Oy, Tampere
(86) International application number: PCT/RU2019/050024
(87) International publication number: WO 2019/209144

(57) **Abstract**

A method of interpreting flaw detector read-outs and digitized signals for the examination of solid bodies serves to convert data in the form of a flaw detector read-out or a digitized signal, which are produced during the non-destructive examination of solid bodies, into a machine-readable form, a human-readable form, or control commands, depending on the intended use.

## Description

The invention relates to the field of non-destructive examination of solid bodies. There are many known methods of non-destructive examination of solid bodies, however, currently, their use is limited by necessity for complex interpreting algorithms or human involvement into the process.

In the proposed solution this task is solved on the basis of machine learning methods, first of all, by means of neural networks. Digital signal (1) resulting from the examination is divided into informative areas (2), which are marked for determination of characteristics under examination. After that, features of the required characteristics are calculated by means of neural networks. For the purpose of testing the training quality the marked informative areas of the digital signal are tested using test readouts. It is resulted in the tested trained neural network (3), where digital signals are transmitted to and a message on presence or absence of the required characteristic is returned by means of a separate interface in the form required for the device or user (4). Additional training of the neural network is executed by evaluation of the interpreting result by the user (5) for the purpose of continuous improvement of training quality. Quality of the recognition performed is evaluated by cross-validation method.

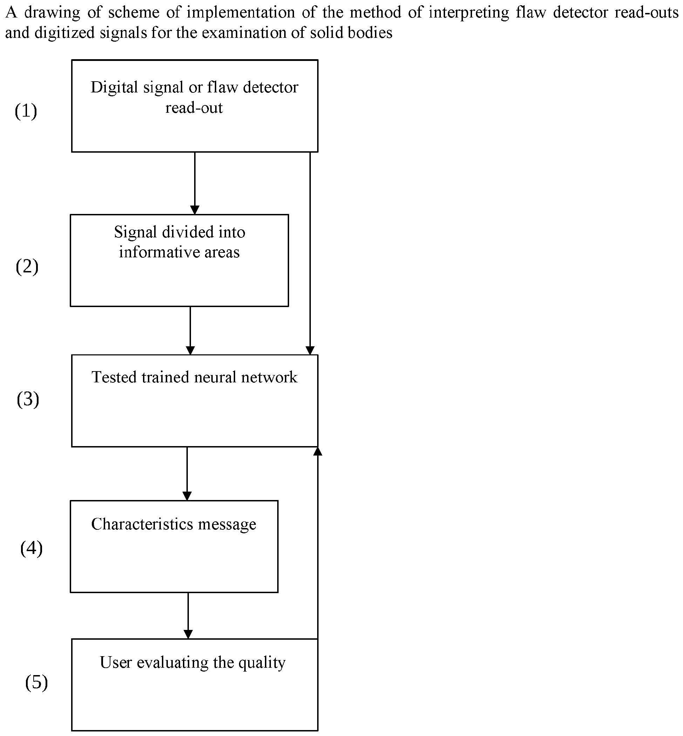

## Claims

1. A method of interpreting flaw detector read-outs and digitized signals for the examination of solid bodies, **characterized in that** interpreting is executed by means of a neural network pretrained on marked data on amplitude-frequency and spectral characteristics, and enabling to obtain a human-readable or machine-readable response about presence or absence of solid body required characteristics or control commands attributable to presence or absence of the required characteristics, which is checked by cross-validation method.
